# EUROPÄISCHE PATENTSCHRIFT

(11) **EP 0 364 407 B1**
(45) Veröffentlichungstag und Bekanntmachung des Hinweises auf die Patenterteilung: **24.05.1995**
(21) Anmeldenummer: 89810779.2
(22) Anmeldetag: 12.10.1989
(51) Int. Cl.: F16K 1/34, F16K 51/02, F16J 15/08, F16L 23/16

(54) **Dichtung für Ventile oder Flansche, insbesondere für die Vakuumtechnik**
Sealing for valves or flanges, especially for vacuum application
Dispositif d'étanchéité pour soupapes ou brides, notamment pour système de vide

(30) Priorität: 13.10.1988 DE 3834913
(43) Veröffentlichungstag der Anmeldung: 18.04.1990
(73) Patentinhaber: Bösch, Hubert, 6890 Lustenau (AT)
(72) Erfinder: Bösch, Hubert, A-6890 Lustenau (AT)
(74) Vertreter: Riebling, Peter, Dr.-Ing.

(56) Entgegenhaltungen:
- DE-A- 2 825 492
- DE-A- 3 628 462
- FR-A- 2 312 710
- FR-A- 2 524 113
- US-A- 3 098 666
- US-A- 3 514 133
- US-A- 4 448 448

## Beschreibung

Ein erster Gegenstand der vorliegenden Erfindung ist eine Dichtung für Ventile nach dem Oberbegriff des Patentanspruchs 1.

Beispielsweise ist es aus der US-A-4 318 532, der DE-A-2 947 585 oder der DE-31 16 401 bekannt, eine Dichtung der eingangs genannten Art so auszubilden, daß an zwei einander gegenüberliegenden Gehäuseflanschen schräge Dichtflächen vorhanden sind, an denen eine Tellerfeder andrückbar ist, wobei der Andruck über eine Druckstange in axialer Richtung erfolgt.

Nachteil dieser bekannten Dichtungsanordnung ist, daß eine Kräftezerlegung am Dichtungssitz zwischen dem Außenumfang der Tellerfeder und dem geneigten Gehäuseflansch stattfindet, wobei stets ein Winkel der Kraftübertragung von beispielsweise etwa 12° vorhanden ist.

Dieser Winkel von etwa 12° kann nicht unterschritten werden, denn wird er z.B. auf 8° vermindert, verklemmt sich die Tellerfeder am Dichtungssitz und kann nicht mehr geöffnet werden.

Nachteil ist also eine ungünstige Kraftzerlegung am Dichtungssitz. Es entsteht dort stets eine axiale Kraft und eine Dichtkraft in senkrechter Richtung hierzu.

Die Dichtkraft wird also durch eine Kräftezerlegung an dem genannten Kräftedreieck bestimmt und wird durch die axiale Kraft erzeugt.

Aufgabe der vorliegenden Erfindung ist es, eine Dichtung der eingangs genannten Art so weiterzubilden, daß möglichst kleine Kräfte in axialer Richtung aufgebracht werden müssen, um eine wesentlich höhere Dichtkraft in senkrechter Richtung hierzu zu erzeugen.

Zur Lösung der gestellten Aufgabe ist die Erfindung durch die Merkmale des Anspruchs 1 gekennzeichnet.

Mit der gegebenen technischen Lehre wird der wesentliche Vorteil erzielt, daß nur eine einzige Dichtfläche vorhanden ist, während bei der DE-A- 2 947 585 zwei unterschiedliche Dichtflächen vorhanden waren.

Durch die Verwendung eines Tellers nach der vorliegenden Erfindung benötigt man nun nicht mehr einen innenliegenden Dichtsitz, wie bei der DE-A- 2 947 585; es ist also nur noch ein einziger Dichtsitz am Außenumfang des Tellers vorhanden.

Weiterer wesentlicher Vorteil ist die überlegene Kraftzerlegung nach der vorliegenden Erfindung gegenüber der DE-A-2 947 585.

Dort ist ebenfalls ein axial bewegbarer Ring gezeigt, der jedoch eine konische Dichtfläche aufweist, die mit einer schräggestellten Tellerfeder etwa senkrecht aufeinanderstehender Dichtflächen ergeben soll.

Es kommt hierbei an diesen schräg entlanggleitenden Dichtflächen zu der vorher beschriebenen ungünstigen Kräftezerlegung, was mit dem Nachteil eines relativ stark begrenzten Dichtungsdruckes und einem Abrollen der Tellerfeder an den beiden Dichtungssitzen verbunden ist, was ebenfalls zu einem vorzeitigen Verschleiß führen kann.

Nach der vorliegenden Erfindung wird also eine Verkantungsbewegung der Tellerfeder in axialer Richtung vorgenommen, wobei wesentlich ist, daß die Tellerfeder an einander gegenüberliegenden, im Schließzustand zueinander fluchtenden zylindrischen Anlageflächen anliegt, so daß hierdurch eine Art Schnappwirkung der Tellerfeder erreicht wird.

Ein zweiter Gegenstand der Erfindung ist eine Dichtung für eine Flanschverbindung gemäss dem Patentanspruch 3.

Eine Flanschverbindung gemäss dem Oberbegriff des unabhängigen Anspruchs 3 ist beispielsweise aus der FR-A- 2 524 113 bekannt. Diese Flanschverbindung hat aber verschiedene Nachteile und Unterschiede gegenüber der Erfindung. Hier wird die Dichtwirkung durch einen Dichtring, der beim Zusammenschrauben der Flansche an konischen Flächen verformt wird, erreicht. Die beiden zu verbindenden Flansche haben aber zwei Berührflächen und müssen deshalb sehr passgenau gefertigt werden.

In der US-A- 3 098 666 wird die Dichtheit zwischen den beiden Flanschen über ein zusätzliches eingefügtes, konisches Stück erreicht. Die ganze Anordnung ist sowohl vom Aufbau als auch von der Fertigung und Montage her sehr kompliziert und teuer.

Die erfindungsgemässe Lösung ist gegenüber diesen beiden Patentschriften wesentlich einfacher und kostengünstiger in Herstellung und Montage.

Die Dichtung des Ventils oder der Flanschverbindung funktioniert prinzipiell also gleich.

Es zeigen.
- Figur 1a:: schematisiert eine Ventildichtung nach der Erfindung im Schließzustand;
- Figur 1b:: die Ventildichtung im Öffnungszustand;
- Figur 2 :: eine Flanschdichtung nach der Erfindung im Schließzustand;
- Figur 3:: die Flanschdichtung nach Figur 2 im Öffnungszustand;
- Figur 4: eine Tellerfeder in einer ersten Ausführungsform im Schnitt;
- Figur 5:: die zweite Ausführungsform einer Tellerfeder in Draufsicht.

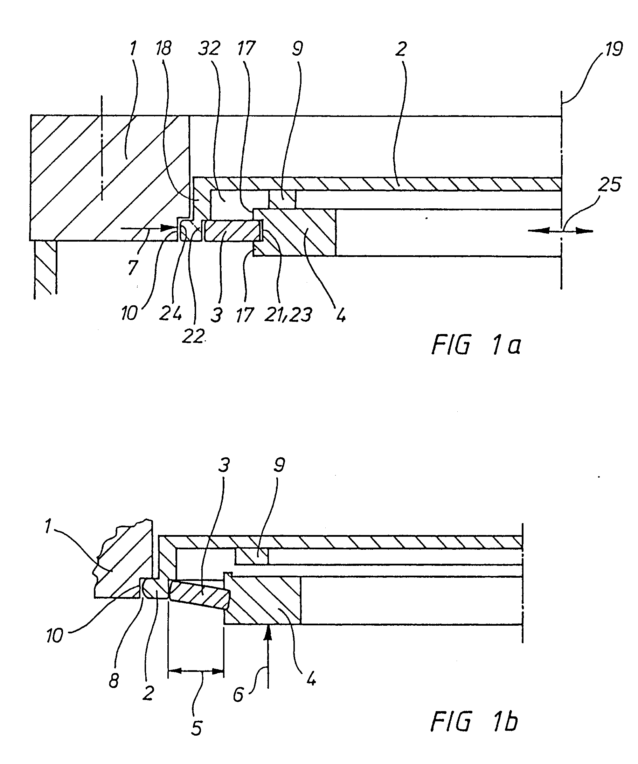

In Figur 1a ist bei einer Ventildichtung ein Hauptflansch 1 dargestellt, der an einem innenliegenden Gehäuseabsatz einen Dichtungssitz 10 aufweist.

In Schließstellung liegt an diesem Dichtungssitz der ballig ausgebildete Außenumfang einer Dichtschneide 24 an, die an einem Flansch 18 eines metallischen Tellers 2 ausgebildet ist.

Radial einwärts zum Teller 2 ist ein Ring 4 vorgesehen, der zusammen mit dem Teller 2 auf einer Mittelachse 19 gelagert ist, wobei der Ring 4 ein gewisses radiales Spiel 25 in der eingezeichneten Pfeilrichtung auf der Mittelachse 19 hat.

Im Zwischenraum 32 zwischen dem Innenumfang des Flansches 18 und dem Außenumfang des Ringes 4 ist eine Tellerfeder 3 angeordnet, die als Kraftelement die auf den Ring 4 in axialer Richtung (Pfeilrichtung 6) aufgebrachte Schließkraft in Gegenrichtung zur eingezeichneten Pfeilrichtung 7 auf den Dichtungssitz 10 übertragen soll.

Zwischen Teller 2 und Hauptflansch 1 ist ein kleiner Spalt (ca. 0,05 mm). Die Tellerfeder 3 ist entweder vom Material her sehr beweglich, oder sie ist vielfach geschlitzt (von innen nach außen und umgekehrt), damit sie extrem beweglich ist. Auf den Ring 4 wirkt nun eine Kraft (Pfeil). Zunächst wird der Flansch 18 des Tellers 2 nach außen gedrückt, bis dieser am Hauptflansch anliegt. Wird der Ring 4 nun weiter in Pfeilrichtung 6 gedrückt, so bringt er über die Kette von Tellerfeder 3 und Teller 2 die Dichtkraft auf den Hauptflansch 1 auf. Dabei wird er im Durchmesser geringfügig nach innen gepresst. Auch die Tellerfeder 3 und der Teller 2 wird gestaucht und der Flansch 1 weicht etwas nach außen aus. Die Übergänge zwischen den einzelnen in Eingriff stehenden Flächen werden auch etwas (elastisch) verformt (Hertz'sche Pressungen).

Rechnerisch wird nun das Ganze so ausgelegt, daß im verriegelten Zustand (Fig. 1a) die Kräfte in Pfeilrichtung 6 = 0 sind (also in senkrechter Richtung zur Dichtkraft) und der Ring 4 soviel Kraft aufbringt, um die geschilderten Verformungen und zusätzlich die Dichtkraft aufzubringen. So gehen die Dichtkräfte radial nach innen (gleichmässig verteilt) und heben sich somit gegenseitig am Umfang verteilt auf.

Die oben geschilderten Verformungen sind äußerst klein. Deshalb kann der Winkel der Tellerfeder 3 sehr flach gehalten werden (ca. 10°). Im Anfangsbereich der Verformung, wenn die Dichtlippe noch gar nicht anliegt, ist die Kraftübersetzung noch nicht allzu gut (ca. 1 : 6 bis 1 : 10) - Kraft in senkrechter Richtung 6 im Vergleich zur Dichtrichtung Pfeilrichtung 7.
Es muß nämlich zunächst nur der Einfahrspalt 8 überbrückt werden. Ist dieser Spalt 8 überwunden, steigt die Kraft 7 stark an. Dann aber steigt auch die Kraftübersetzung gleicherweise. Dort beträgt sie bereits 1:15 und besser. Je höher nun die Dichtkraft 7 wird, desto näher ist die Tellerfeder beim Totpunkt. Am Schluß, bei der höchsten Kraft in Pfeilrichtung 7, ist sie bei der übersetzung theoretisch 1: unendlich. Dann bestimmt nur noch der Querschnitt des Ringes 4 und sein Material die Kraft. Um ein Überschnappen in Pfeilrichtung 6 zu vermeiden, ist ein Anschlag 9 am Teller 2 fest oder lösbar angeordnet.

Die Tellerfeder wird also mit der axialen Bewegung des Ringes 4 in Pfeilrichtung 6 zwischen den beiden einander gegenüberliegenden zylindrischen Anlageflächen 21,22 verkeilt, und gibt die auf sie ausgeübte, radial auswärts gerichtete Kraft in genau der gleichen Richtung, nämlich in Richtung des Dichtungssitzes (Pfeilrichtung 7) auf den radial auswärts verbiegbaren Flansch 18 des Tellers 2 wieder, der damit ebenfalls in Gegenrichtung zur Pfeilrichtung 7 radial nach außen gedrückt wird und sich mit seiner Dichtschneide 24 unter Ausübung einer hohen Dichtungskraft an den Dichtungssitz 10 am gehäusefesten Hauptflansch 1 anlegt.

Es wird mit der vorliegenden Erfindung eine weit geringere Schließkraft in axialer Richtung benötigt, wie bei den bisherigen Anordnungen, weil eine gerade Kraftübertragung stets in Gegenrichtung zur Pfeilrichtung 7 (ohne dazu abgewinkelte Krafteinleitung) erreicht wird.

Wesentlich hierbei ist also, daß ein Teller 2 mit einem radial auswärts verformbaren Flansch 18 verwendet wird, der an seinem äußeren, umlaufenden Ende eine Dichtschneide 24 aufweist.

Durch die Verwendung eines Tellers mit einem radial auswärts verformbaren Dichtflansch 18 wird der Vorteil erreicht, daß nur ein einziger Dichtungssitz vorgesehen werden muß, während bei den übrigen Dichtungen nach dem Stand der Technik in der Regel zwei Dichtungssitze vorgesehen sind.

Die Dichtschneide 24 des Flansches 18 kann verschiedenartig ausgebildet sein. Sie kann im Profil ballig ausgebildet sein, d.h. einen gewissen Radius aufweisen; sie kann im Profil jedoch auch trapezförmig als Schneide ausgebildet sein.

Ferner ist wesentlich, daß die innere Anlagefläche 21 der Tellerfeder 3 im Bereich einer Ringnut 23 vorgesehen ist, die axial nach oben und unten durch entsprechende Ansätze 17 begrenzt wird. Dadurch wird ein unerwünschtes Herausrutschen der Tellerfeder 3 bei ihrer Verkantungsbewegung (vergl. übergang der Figur 1a zu Figur 1b) erreicht.

Wichtig ist ferner, daß der Teller 4 auf der Mittelachse 19 mit einem gewissen radialen Spiel 25 gelagert ist, um diese Verformungen, die durch das Verkeilen der Tellerfeder 3 im Dichtzustand aufgebracht werden, aufnehmen zu können.

Wesentlich bei der vorliegenden Erfindung ist also, daß mit wesentlich niedrigeren Schließkräften in Pfeilrichtung 6 höhere Dichtungskräfte in Pfeilrichtung 7 erzeugt werden können, wobei die Tellerfeder 3 praktisch keinem Verschleiß ausgesetzt wird.

Alle Materialien sollen hierbei in ihrem elastischen Bereich beansprucht werden; plastische Verformungen sind unerwünscht.

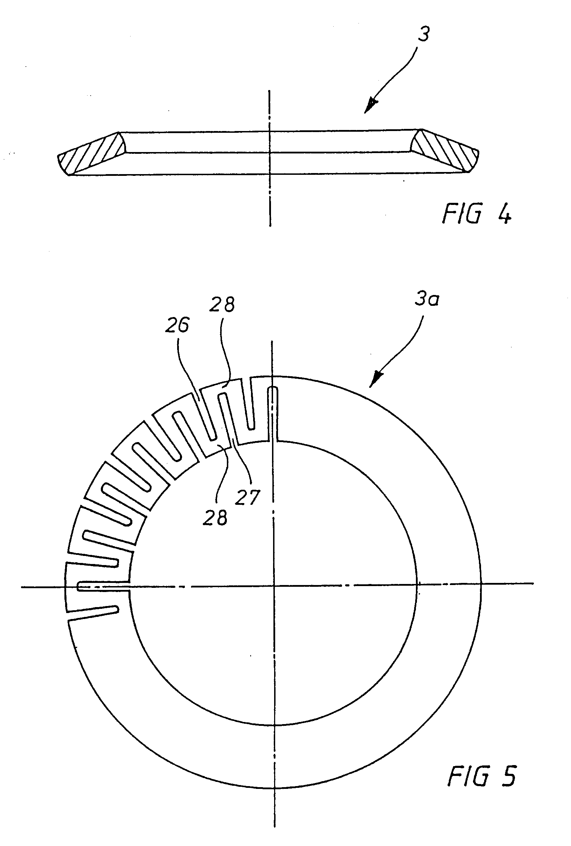

In der Figur 4 ist der Schnitt durch eine erste Ausführung einer Tellerfeder 3 dargestellt, wie die Tellerfeder in unbelastetem Zustand nach Figur 1b eingebaut wird.

Die Figur 5 zeigt eine weitere Ausführungsform einer Tellerfeder 3a, wo am äußeren Umfang radial einwärts weisende Schlitze 26 und demgegenüberliegend auf Lücke versetzt am inneren Umfang radial auswärts liegende Schlitze 27 angeordnet sind, wobei die Schlitze 26,27 einen bestimmten Abstand 28 von der jeweiligen radialen Außen- oder Innenfläche aufweisen.

Dadurch wird der Tellerfeder 3a eine gute Elastizität in Verkantungsrichtung verliehen; aber in radialer Richtung ist sie sehr stabil und wenig zusammendrückbar. Dadurch gelingt es, die von dem Ring 4 radial auswärts in horizontal er Richtung erzeugten Kräfte in gleicher horizontaler Richtung unmittelbar also in gleicher Linie auf den Dichtungssitz 10 zu übertragen.

Es wird damit eine Linienübertragung der Kräfte stets in horizontaler Richtung nach der Figur 1a erzeugt, und es kommt nicht zu einer Kräftezerlegung, wie sie als nachteilig beim Stand der Technik empfunden wurde.

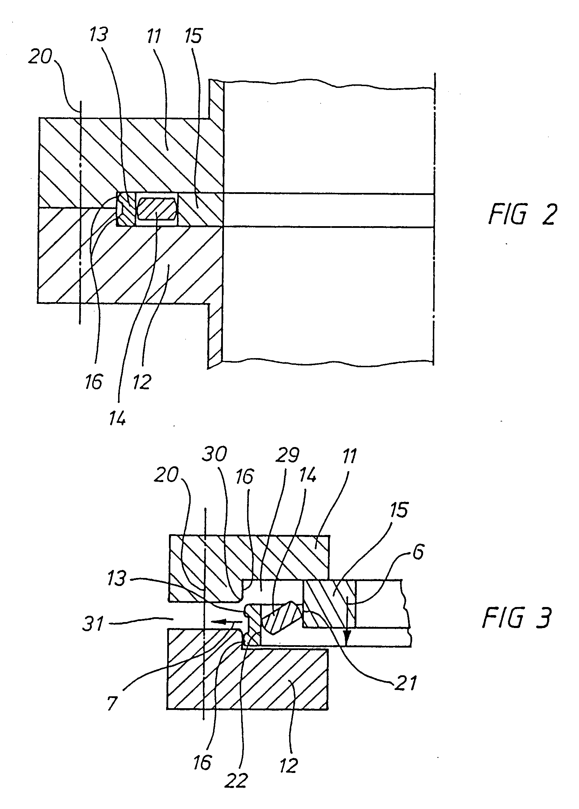

Die Figuren 2 und 3 zeigen ein abgewandeltes Ausführungsbeispiel, nämlich eine Flanschverbindung, wobei Figur 2 die Flanschverbindung im Dichtungszustand und Figur 3 die Flanschverbindung im öffnungszustand zeigt.

Hierbei sind gemäss Figur 3 zwei symmetrisch ausgebildete Flansche 11,12 einander gegenüberliegend und bilden sich einen Zwischenraum 29 aus, wobei an der inneren, radial außenliegenden Stirnfläche des Zwischenraumes 29 die Dichtflächen 16 der Dichtung ausgebildet sind.

Im Zwischenraum 29 ist ein Teller 13 aus Metall angeordnet, und es wird wiederum eine zylindrische Anlagefläche 22 zwischen dem Innenumfang des Tellers 13 und dem Außenumfang einer Tellerfeder 14 ausgebildet, die in der gleichen Weise wie vorher beschrieben eingebaut ist.

Ebenso ist an der gegenüberliegenden Seite ebenfalls eine zylindrische Anlagefläche 21 vorgesehen.

Auch hier könnte eine Ringnut 23 vorgesehen werden, so wie sie im Ausführungsbeispiel nach den Figuren 1a und 1b dargestellt ist.

Ansonsten ist die gleiche Funktion, wie bei dem erstbeschriebenen Ausführungsbeispiel gegeben; d.h. durch eine axiale Bewegung beim Zusammenschrauben der beiden Flansche 11,12 über die Schraubenverbindung mit der Schraube 20 , werden zunächst die Dichtflächen 16 zueinander geführt, wobei bei der oberen Dichtfläche 16 ein Konus 30 angeordnet ist, der beim Zusammenfahren der Dichtungsflächen an dem Teller 13 vorbeigleitet, ohne diese zu beschädigen.

Die Verkantungsbewegung wird dadurch erreicht, indem durch Zusammenschrauben der beiden Flansche 11,12 gleichzeitig der Ring 15 in Pfeilrichtung 6 nach unten bewegt wird und hierdurch sich wiederum die Tellerfeder 14 im Zwischenraum zwischen den beiden einander gegenüberliegenden und im Dichtungszustand zueinander fluchtenden Anlageflächen 21,22 verkeilt und hierdurch einen radial auswärts gerichteten Dichtungsdruck in Pfeilrichtung 7 ausübt, welcher die erforderliche Dichtungskraft von der Dichtung 14 auf die Dichtflächen 16 ergibt.

Der Ring 15 muß zwischen den beiden Flanschen 11,12 einen gewissen Abstand mit seinen Deck- und Bodenflächen haben, damit er sich mit radialem Spiel 25 im Zwischenraum 29 bewegen kann.

Zu den Figuren 1a und 1b wird noch hinzugefügt, daß der Teller 2 über eine nicht näher dargestellte Mitnahmenase mit dem axial bewegbaren Ring 4 verbunden ist.

Wenn zur Erreichung einer Öffnungsbewegung in Figur 1a der Ring 4 in Gegenrichtung zur Pfeilrichtung 6 nach unten bewegt wird, dann greift diese Mitnahmenase des Tellers 2 unter den Ring 4, so daß der Teller 2 ebenfalls in Gegenrichtung zur Pfeilrichtung 6 von der Dichtfläche 10 abgehoben wird und in der Gegenrichtung zur Pfeilrichtung 6 nach unten mitgenommen wird.

Bei der vorliegenden Erfindung wird die Kraftzerlegung nicht über das Dichtelement - wie z.B. bei der DE 2 947 585 - bewerkstelligt, sondern über ein separates Glied, nämlich die Tellerfeder 3,3a mit dem schwimmenden Ring 4. Dieses separate Glied ist deshalb nicht empfindlich für feinste Kratzer und Beschädigungen wegen den Bewegungen, die ein solches Glied ausführt, um die erfindungsgemäss angestrebte Kräftezerlegung wirksam werden zu lassen.

## Patentansprüche

1. Dichtung für Ventile, insbesondere in der Vakuumtechnik, mit mindestens zwei einander gegenüberliegenden, an einem Flansch (1) und an einem Teller (2) angeordneten Dichtflächen (10,24), an denen ein in axialer Richtung verschiebbares Dichtungselement zur Anlage gebracht werden kann, **dadurch gekennzeichnet**, daß am Teller (2) ein ringförmiger Wulst (18) radial im elastischen Bereich verformbar ist, daß zwischen einem axial verstellbaren Ring (4) kleineren Durchmessers und dem ringförmigen Wulst (18) des Tellers (2) eine Tellerfeder (3) angeordnet ist, für die in geöffnetem Zustand bei einem Winkel von etwa 12° so viel Abstand (5) vorhanden ist, daß sie mit ihrem Außendurchmesser den Innendurchmesser des ringförmigen Wulstes (18) am Teller (2) und mit ihrem Innendurchmesser den axial verstellbaren Ring (4) berührt und daß diese Tellerfeder (3) im verriegelten Zustand die Dichtkraft vom axial verstellbaren Ring (4) auf den ringförmigen Wulst (18) des Tellers (2) radial nach aussen auf den Dichtungssitz (10) des Flansches (1) überträgt, wobei die Vorrichtung nur eine einzige Dichtlinie aufweist, die senkrecht zur axialen Bewegungsrichtung des Rings (4) verläuft, und der Wulst des Tellers (2) die mit dem Dichtungssitz des Flansches (1) zusammenwirkende Dichtungslinie trägt.

2. Dichtung nach Anspruch 1, **dadurch gekennzeichnet**, daß die dem Dichtungssitz (10) zugeordnete äußere Fläche der radial verformbaren Wulst (18) des Tellers (2) als eine Dichtschneide (24) ausgebildet ist.

3. Dichtung für eine Flanschverbindung, insbesondere in der Vakuumechnik, zwischen zwei einander gegenüberliegenden und axial zueinander bewegbaren Flanschen (11,12), welche einen zwischen sich radial nach innen offenen Zwischenraum (29) bilden, wobei Dichtflächen (16) an der inneren, radial außenliegenden, Stirnfläche des Zwischenraumes (29) ausgebildet sind, mit einem als axial verschiebbaren Teller ausgebildeten Dichtungselement (13), das mindestens zwei, den Dichtflächen (16) der Flansche (11,12) gegenüberliegende Dichtflächen aufweist, die zur Anlage mit den Dichtflächen (16) der Flansche (11,12) gebracht werden können, **dadurch gekennzeichnet**, daß eine axial zwischen den Flanschen (11,12) liegende, den Zwischenraum (29) überbrückende, Tellerfeder (14) vorgesehen ist, die mit ihrem Außenumfang am Innenumfang des Tellers (13) anliegt, und sich mit ihrem Innenumfang am Außenumfang eines im Zwischenraum (29) axial bewegbaren Ringes (15) abstützt, wobei die Tellerfeder (14) zwischen dem Teller (13) und dem Ring (15) verkantbar ist.

4. Dichtung nach einem oder mehreren der Ansprüche 1 bis 3, **dadurch gekennzeichnet**, daß der Ring (4,15) auf seiner Mittelachse (19) mit radialem Spiel (25) gelagert ist.

5. Dichtung nach einem oder mehreren der Ansprüche 1 bis 4, **dadurch gekennzeichnet**, daß in der Tellerfeder (3a) am Umfang versetzt radial einwärts gerichtete Schlitze (26) eingearbeitet sind und daß demgegenüberliegend auf Lücke versetzt am inneren Umfang radial auswärts gerichtete Schlitze (27) angeordnet sind.

6. Dichtung nach einem oder mehreren der Ansprüche, 1 bis 5, **dadurch gekennzeichnet**, daß der Teller (2,13) über eine Mitnahmenase mit dem axial bewegbaren Ring (4,15) in Eingriff ist.

## Claims

1. A seal for valves, in particular in vacuum technology, with at least two sealing faces (10,24) lying opposite each other, arranged on a flange (1) and on a plate (2), against which sealing faces a sealing element, which is displaceable in axial direction, can be brought to rest, characterised in that on the plate (2) an annular bead (18) is radially deformable in the elastic region, that between an axially adjustable ring (4) of smaller diameter and the annular bead (18) of the plate (2), a plate spring (3) is arranged, for which in opened state at an angle of approximately 12° so much space (5) is present, that it touches with its external diameter the internal diameter of the annular bead (18) on the plate (2) and with its internal diameter it touches the axially adjustable ring (4) and that this plate spring (3), in locked state, transmits the sealing force from the axially adjustable ring (4) onto the annular bead (18) of the plate (2) radially outwards onto the sealing seat (10) of the flange (1), in which the device only has a single sealing line, which runs vertically to the axial direction of movement of the ring (4), and the bead of the plate (2) carries the sealing line cooperating with the sealing seat of the flange (1).

2. A seal according to Claim 1, characterised in that the outer surface of the radially deformable bead (18) of the plate (2), associated with the sealing seat (10), is constructed as a sealing edge (24).

3. A seal for a flange connection, in particular in vacuum mechanics, between two flanges (11,12), lying opposite each other and movable axially with respect to each other, which form an intermediate space (29) which is open radially inwards between them, in which sealing faces (16) are constructed on the inner end face of the intermediate space (29) lying radially externally, with a sealing element (13), constructed as an axially displaceable plate, which has at least two sealing faces, lying opposite the sealing faces (16) of the flanges (11,12), which may be brought to rest against the sealing faces (16) of the flanges (11,12), characterised in that a plate spring (14), lying axially between the flanges (11,12), bridging the intermediate space (29), is provided, which rests with its outer circumference against the inner circumference of the plate (13), and is supported with its inner circumference against the outer circumference of a ring (15) which is movable axially in the intermediate space (29), in which the plate spring (14) is able to be tilted between the plate (13) and the ring (15).

4. A seal according to one or more of Claims 1 to 3, characterised in that the ring (4, 15) is mounted on its central axis (19) with radial play (25).

5. A seal according to one or more of Claims 1 to 4, characterised in that in the plate spring (3a) radially inwardly directed slits (26) are incorporated, staggered on the circumference, and that lying opposite, staggered at intervals, radially outwardly directed slits (27) are arranged on the inner circumference.

6. Seal according to one or more of Claims 1 - 5, characterized in that the plate (2,13) is in contact with the axial adjustable ring (4,15) via a driving catch.

## Revendications

1. Dispositif d'étanchéité pour soupapes, notamment dans le secteur technique du vide, comportant au moins deux surfaces d'étanchéité (10, 24) situées, l'une en face de l'autre, sur un collet (1) et sur une tête de soupape (2), et contre lesquelles un élément d'étanchéité, mobile en direction axiale, peut être amené en appui, caractérisé en ce que, sur la tête de soupape (2), un bourrelet annulaire (18) est déformable radialement, dans le domaine élastique, en ce qu'entre un anneau (4) de plus petit diamètre, déplaçable axialement, et le bourrelet annulaire (18) de la tête de soupape (2), est disposée une rondelle-ressort (3), pour laquelle, dans l'état ouvert et pour un angle d'environ 12°, un interstice (5) suffisamment grand est ménagé pour qu'elle soit en contact, par sa circonférence extérieure, avec la circonférence intérieure du bourrelet annulaire (18) présent sur la tête de soupape (2) et, par sa circonférence intérieure, avec l'anneau déplaçable axialement (4), et en ce que cette rondelle-ressort (3), dans l'état verrouillé, transfère la force d'étanchéification de l'anneau déplaçable axialement (4) sur le bourrelet annulaire (18) de la tête de soupape (2) radialement vers l'extérieur en direction du siège d'étanchéité (10) du collet (1), le dispositif ne présentant qu'une seule ligne d'étanchéité, qui s'étend perpendiculairement à la direction de déplacement axial de l'anneau (4), et le bourrelet de la tête de soupape (2) portant la ligne d'étanchéité qui coopère avec le siège d'étanchéité du collet (1).

2. Dispositif d'étanchéité selon la revendication 1, caractérisé en ce que la surface extérieure, associée au siège d'étanchéité (10), du bourrelet déformable radialement (18) de la tête de soupape (2) est réalisée sous la forme d'une arête d'étanchéification (24).

3. Dispositif d'étanchéité pour un assemblage de brides, notamment dans le secteur technique du vide, entre deux brides (11, 12) placées l'une en face de l'autre et déplaçables axialement l'une par rapport à l'autre, qui délimitent un espace intermédiaire (29) s'ouvrant entre elles radialement vers l'intérieur, des surfaces d'étanchéité (16) étant formées sur les surfaces latérales internes, situées radialement vers l'extérieur, de l'espace intermédiaire (29), le dispositif d'étanchéité comportant un élément d'étanchéité (13) réalisé sous la forme d'un plateau mobile axialement, qui présente au moins deux surfaces d'étanchéité situées face aux surfaces d'étanchéité (16) des brides (11, 12) et qui peuvent être amenées en appui contre les surfaces d'étanchéité (16) des brides (11, 12), caractérisé en ce qu'il est prévu une rondelle-ressort (14) qui est positionnée axialement entre les brides (11, 12) et ponte l'espace intermédiaire (29), et qui s'applique, par son pourtour extérieur, contre le pourtour intérieur du plateau (13) tout en s'appuyant, par son pourtour intérieur, contre le pourtour extérieur d'un anneau (15) déplaçable axialement dans l'espace intermédiaire (29), la rondelle-ressort (14) pouvant être coincée entre le plateau (13) et l'anneau (15).

4. Dispositif d'étanchéité selon une ou plusieurs des revendications 1 à 3, caractérisé en ce que l'anneau (4, 15) est monté avec un jeu radial (25) sur son axe central (19).

5. Dispositif d'étanchéité selon une ou plusieurs des revendications 1 à 4, caractérisé en ce que des fentes (26) sont usinées dans la rondelle-ressort (3a), en étant réparties sur son pourtour et dirigées radialement vers l'intérieur, et en ce que des fentes (27), réparties en quinconce par rapport à ces dernières, sont disposées sur le pourtour intérieur en étant dirigées radialement vers l'extérieur.

6. Dispositf d'étanchéité selon une ou plusieurs des revendications 1 à 5, caracterisé ence que la tête de soupape (2,13) est en contact avec l'anneau deplaçable axialement (4) par un nez d'entraînement.
